# EUROPEAN PATENT SPECIFICATION

(11) **EP 3 416 998 B1**
(45) Date of publication and mention of the grant of the patent: **16.03.2022**
(21) Application number: 17700567.5
(22) Date of filing: 19.01.2017
(51) Int. Cl.: C08G 63/183, C08G 63/78, C08G 63/80, C08G 63/85

(54) **PROCESS FOR THE PRODUCTION OF POLY(BUTYLENE TEREPHTHALATES)**
VERFAHREN ZUR HERSTELLUNG VON POLY(BUTENTEREPHTHALATEN)
PROCÉDÉ POUR LA PRODUCTION DE POLY(BUTYLÈNE TÉRÉPHTALATE)

(30) Priority: 15.02.2016 EP 16155751
(43) Date of publication of application: 26.12.2018
(73) Proprietor: SABIC Global Technologies B.V., 4612 PX Bergen op Zoom (NL)
(72) Inventor: KUMAR, Prashant, 6160 GA Geleen (NL); ALIDEDEOGLU, Husnu, Alp, 6160 GA Geleen (NL)
(74) Representative: Sabic Intellectual Property Group
(86) International application number: PCT/EP2017/051045
(87) International publication number: WO 2017/140453

(56) References cited:
- US-A1- 2002 028 904
- US-A1- 2008 274 320
- US-B2- 7 204 962

## Description

The present invention related to a process for the production of poly(butylene terephthalates), also referred to as PBT. It further relates to poly(butylene terephthalates) obtained according to such process. It also relates to fibres produced using such poly(butylene terephthalate).

Poly(butylene terephthalates) are well-known thermoplastic polymers having a variety of properties rendering them particularly suitable for numerous applications, including for example in production of fibres.

The production of poly(butylene terephthalates) for example can take place via either of two processes. The first process involves reacting a mixture of reactants comprising a diester of terephthalic acid, such as dimethyl terephthalate (also referred to as DMT), and a diol, such as 1,4-butanediol. However, this process has certain disadvantages, amongst which the formation of methanol as a by-product. The equipment used in such production process needs to be suited to process this by-product. Furthermore, DMT needs to be introduced in the molten state, which involves either melting the DMT before supplying to the reaction mixture, or transporting the DMT in molten state, which brings about certain difficulties in transport and handling.

The second process involves reacting a mixture of reactants comprising terephthalic acid, for example in the form of purified terephthalic acid (also referred to as PTA), and a diol, such as 1,4-butanediol. The PTA preferably comprises ≥ 99.0 wt% of terephthalic acid. This process overcomes certain objections of the process in which DMT is used. For example, PTA may be introduced into the reaction mixture in the form of solid flakes, thereby avoiding the need for melting such as is the case when using DMT.

Furthermore, the processes according to the state of the art wherein DMT is used suffer from the disadvantage that a certain quantity of raw material disappears from the reaction due to evaporation of DMT and subsequent sublimation. This has a negative impact on the raw material efficiency of such processes.

Thus, it is evident that there is a desire to produce poly(butylene terephthalate) starting form a mixture of reactants comprising terephthalic acid.

Such processes are known and described in for example WO2003-042278A1 and in US2002/028904 A1. In US2002/028904 A1, the preparation of high molecular weight, linear poly(alkylene terephthalate) resins are described. According to example 1 and tables 1-2, a PBT-oligomer is first prepared from 1,4-butanediol and terephthalic acid in the presence of a tetraisopropyl titanate catalyst. Then, polycondensation occurs in a reactor under reduced pressure (lower than 5 mbar) at 245°C, 250°C or 255°C.

In WO2003-042278A1, the production of polyesters such as poly(butylene terephthalates) using terephthalic acid is described wherein the process involves two main steps, a first step relating to the conversion of terephthalic acid and a diol into an oligomer in a first reactor, being a tower reactor, followed by a further polycondensation step which may be a melt polycondensation or a solid-state polycondensation to obtain a polyester having a desired molecular weight.

However, such process for the production of poly(butylene terephthalate) in which terephthalic acid is used, according to the state of the art, also results in certain drawbacks. One particular drawback is the quantity of carboxylic end groups (also referred to as CEG) present in the poly(butylene terephthalate) obtained via the processes according to the state of the art using terephthalic acid. When producing a poly(butylene terephthalate) having a certain intrinsic viscosity (also referred to as IV), the CEG of a poly(butylene terephthalate) produced via the processes according to the state of the art in which terephthalic acid is used is higher than is the case for a poly(butylene terephthalate) produced via a process in which DMT is used.

The processes for the production of poly(butylene terephthalates) using PTA according to the prior art may for example comprise the main process steps of:
(a) reacting a reaction mixture comprising PTA and a diol, such a 1,4-butanediol, in an esterification reactor to produce a first poly(butylene terephthalate) oligomer.
(b) subjecting the first poly(butylene terephthalate) oligomer obtained from (a) to a first polycondensation in one or more reactors such as one or more continuously stirred tank reactors to obtain a second poly(butylene terephthalate) oligomer; and
(c) subjecting the second poly(butylene terephthalate) oligomer obtained from (b) to a further polycondensation in a low-pressure reactor to obtain the poly(butylene terephthalate) product.

The carboxylic end group content of poly(butylene terephthalate) products of certain intrinsic viscosity produced with such process may be higher than that produced via the DMT process. The ratio of IV : CEG may be as low as ≤ 10 dl/mmol. This is undesired as it leads to a poly(butylene terephthalate) product of lesser quality. For that reason, there is a need to reduce the quantity of carboxylic end groups in poly(butylene terephthalate) of a given intrinsic viscosity produced via a process in which terephthalic acid such as PTA is used. In particular, it is desired to have a process in which a poly(butylene terephthalate) is produced having a desired balance of IV and CEG starting from a poly(butylene terephthalate) oligomer having a ratio of IV : CEG of ≤ 10 dl/mmol.

This has now been achieved according to the present invention by a process for the production of poly(butylene terephthalate) comprising the steps of:
(i) providing a poly(butylene terephthalate) oligomer having an intrinsic viscosity (IV) of 0.25 - 0.35 dl/g, preferably 0.27 - 0.33 dl/g, a carboxylic end group (CEG) content of 25-35 mmol/kg, preferably 27-33 mmol/kg, and a ratio of IV : CEG of ≤ 15 dl/mmol, preferably ≤ 10 dl/mmol;
(ii) introducing said poly(butylene terephthalate) oligomer to a low-pressure reactor; and
(iii) performing a polycondensation reaction in said low-pressure reactor by subjecting the poly(butylene terephthalate) oligomer to a pressure of ≥ 0.05 and ≤ 5.0 mbar at a temperature of 240 to 250 °C, for such period to obtain a poly(butylene terephthalate) having a ratio of IV : CEG of ≥ 18 dl/mmol, preferably ≥ 25 dl/mmol and an IV of ≥ 0.45 dl/g;
wherein
- the CEG is determined in accordance with ASTM D7409-15;
- the IV is determined in accordance with ASTM D2857-95 (2007); and
- steps (i), (ii) and (iii) are conducted in that order.

Preferably, the pressure in the low-pressure reactor of step (iii) is ≥ 0.05 and ≤ 5.0 mbar, more preferably ≥ 0.1 and ≤ 4.5 mbar, alternatively ≥ 0.5 and ≤ 3.5 mbar, alternatively ≥ 1.0 and ≤ 3.0 mbar.

Preferably, the temperature in the low-pressure reactor of step (iii) is ≥ 240 and ≤ 250 °C.

The average residence time in the low-pressure reactor of step (iii) is ≥ 45 min and ≤ 3 hrs, alternatively ≥ 60 min and ≤ 120 min.

Such process allows for the production of poly(butylene terephthalates) having a desired low CEG at given, desired high, IV using a poly(butylene terephthalate) oligomer having a relatively high CEG at given IV. Such process allows for the production of poly(butylene terephthalates) using poly(butylene terephthalate) oligomers obtained from an esterification process using PTA and 1,4-butanediol.

In the context of the present invention, the intrinsic viscosity of the poly(butylene terephthalates) and poly(butylene terephthalate) oligomers may be determined according to ASTM D2857-95 (2007). The intrinsic viscosity is understood to be a parameter indicating the degree of polymerisation of the poly(butylene terephthalate).

The quantity of carboxylic end groups of a poly(butylene terephthalate) is understood to be related to the hydrolytic stability of poly(butylene terephthalate), i.e. the ability to maintain the material properties over a certain length of time under exposure to certain conditions such a ambient conditions. The higher the quantity of carboxylic end groups in the poly(butylene terephthalate), the less the hydrolytic stability. In the context of the present invention, the carboxylic end group content in the poly(butylene terephthalates) and the poly(butylene terephthalate) oligomers may be determined according to ASTM D7409-15.

This increased carboxylic end group content in the poly(butylene terephthalate) may be due to the oligomer that is produced using PTA having a higher carboxylic end group content at given intrinsic viscosity, compared to that produced in a process using DMT.

For example, the obtained poly(butylene terephthalate) has a ratio of IV : CEG of ≥ 18 dl/mmol, preferably ≥ 25 dl/mmol, such as ≥ 20 dl/mmol and ≤ 100 dl/mmol, preferably ≥ 25 dl/mmol and ≤ 80 dl/mmol.

It is preferred that the obtained poly(butylene terephthalate) has an IV of ≥ 0.45 dl/g, or ≥ 0.50 dl/g, alternatively ≥ 0.55 dl/g. For example, the obtained poly(butylene terephthalate) has and IV of ≥ 0.45 and ≤ 1.80 dl/g, alternatively ≥ 0.45 and ≤ 1.40 dl/g, Preferably, the poly(butylene terephthalate) has an intrinsic viscosity of ≥ 0.45 dl/g and ≤ 1.00 dl/g, alternatively ≥ 0.50 and ≤ 1.00 dl/g. Such poly(butylene terephthalate) is particularly suitable for use in the production of fibres such as textile fibres. Textile fibres comprising poly(butylene terephthalate) may for example have a desired good rigidity, dimensional stability and shape retention. Such textile fibres in many instances are produced by processes such as melt spinning. Poly(butylene terephthalates) obtained via the process according to the present invention having an IV of for example ≥ 0.45 and ≤ 1.40 dl/g, alternatively ≥ 0.50 and ≤ 1.00 dl/g may be suitable for processing into fibres via melt spinning. Fibres, such as obtained via melt spinning, of a composition comprising poly(butylene terephthalate) obtained via the process according to the present invention may for example have a good elastic strain. Furthermore, fibres, such as obtained via melt spinning, of a composition comprising poly(butylene terephthalate) obtained according to the process of the present invention may for example have a good resistance to chlorine. Because of this good chlorine resistance and the good elastic strain properties, such fibres may be particularly suitable for use in the production of swimwear.

It is preferred that the poly(butylene terephthalate) obtained according to the process of the present invention has a carboxylic end group content of ≤ 20 mmol/g, more preferably ≤ 15 mmol/g. Fibres produced using such poly(butylene terephthalate) obtained according to the process of the present invention may have a particularly good resistance to chlorine and may thus be suitable in the production of swimwear. Such fibres may for example be produced using polymer compositions comprising ≥ 5 wt% and ≤ 80 wt%, preferably ≥ 10 wt% and ≤ 60 wt% or ≥ 30 wt% and ≤ 50 wt% of poly(butylene terephthalate) obtained according to the process of the present invention with regard to the total weight of the polymer composition. Such polymer composition may further comprise a fraction of poly(ethylene terephthalate), such as ≥ 10 wt% and ≤ 80 wt%, or ≥ 30 wt% and ≤ 50 wt%, with regard to the total weight of the polymer composition. For example, such polymer compositions may comprise ≥ 30 wt% and ≤ 60 wt% of poly(butylene terephthalate) obtained according to the process of the present invention and ≥ 40 wt% and ≤ 70 wt% of poly(ethylene terephthalate), with regard to the total weight of the poly(butylene terephthalate) and the poly(ethylene terephthalate).

It is preferred that textile fibres comprising the poly(butylene terephthalate) prepared using the process according to the invention have a chlorine resistance determined as the breaking force retention in accordance with ISO 17608 (2015) of ≥ 50%, alternatively ≥ 60%, alternatively ≥ 70 %.

It is further preferred that the textile fibres comprising the poly(butylene terephthalate) prepared using the process according to the invention have an elastic elongation of ≥ 20 %, preferably ≥ 25%, as determined according to ASTM D4964 96.

It is preferred that the poly(butylene terephthalate) oligomer is provided to step (i) in molten state. More preferable, the poly(butylene terephthalate) oligomer is provided at a temperature of ≥ 235°C and ≤ 255 °C, even more preferably ≥ 240 °C and ≤ 250 °C. For example, the poly(butylene terephthalate) oligomer may be provided under the conditions as obtained from the process for the production of said poly(butylene terephthalate) oligomer. For example, the poly(butylene terephthalate) oligomer may be provided by a direct pipeline supply from the process for the production of said poly(butylene terephthalate) oligomer, optionally involving a buffering means for the poly(butylene terephthalate) oligomer positioned between the process for the production of the poly(butylene terephthalate) oligomer and step (i) of the process according to the present invention.

It is preferred that the poly(butylene terephthalate) oligomer that is provided to step (i) is an oligomer having an intrinsic viscosity (IV) of 0.25 - 0.35 dl/g, alternatively 0.27 - 0.33 dl/g. The intrinsic viscosity of a poly(butylene terephthalate) and a poly(butylene terephthalate) oligomer may be understood to reflect the degree of polymerisation.

The poly(butylene terephthalate) oligomer may for example be obtained from a reaction of a reaction mixture comprising purified terephthalic acid (PTA) and 1,4-butanediol. Optionally, the reaction mixture may comprise one or more further dicarboxylic acids. Suitable further dicarboxylic acids may for example be selected from aromatic dicarboxylic acids such as isophthalic acid and naphthalene dicarboxylic acid. Alternatively, suitable further dicarboxylic acids may for example be selected from aliphatic dicarboxylic acids such as 1,2-cyclohexane dicarboxylic acid, 1,4-cyclohexane dicarboxylic acid, 1,4-butane dicarboxylic acid, 1,6-hexane dicarboxylic acid, 1,8-octane dicarboxylic acid, and 1,10-decane dicarboxylic acid. The reaction product may also comprise one or more further diol, such as ethanediol and propanediol.

For example, the reaction mixture may comprise only terephthalic acid as dicarboxylic acid, and only 1,4-butanediol as diol. In such case, the poly(butylene terephthalate) obtained from the process is a poly(butylene terephthalate) homopolymer. In other embodiments, the reaction mixture may comprise ≥ 90.0 wt%, alternatively ≥ 95.0 wt%, alternatively ≥ 98.0 wt%, of terephthalic acid, with regard to the total weight of the dicarboxylic acids. In further embodiments, the reaction mixture may comprise ≥ 90.0 wt%, alternatively ≥ 95.0 wt%, alternatively ≥ 98.0 wt%, of 1-4-butanediol with regard to the total weight of the diols.

It is preferred that the reaction mixture comprises ≥ 95.0 wt% of terephthalic acid with regard to the total weight of the dicarboxylic acids, and ≥ 95.0 wt% of 1,4-butanediol with regard to the total weight of the diols. Alternatively, the reaction mixture may comprise ≥ 95.0 wt% of terephthalic acid with regard to the total weight of the dicarboxylic acids, and only 1,4-butanediol as diol.

Preferably, the molar ratio of 1,4-butanediol to purified terephthalic acid in the reaction mixture used in the process for the production of the poly(butylene terephthalate) oligomer is ≥ 1.8 and ≤ 4.0, more preferably ≥ 1.8 and ≤ 3.5, more preferably ≥ 2.0 and ≤ 3.0.

The conversion rate of terephthalic acid in the poly(butylene terephthalate) oligomer provided to step (i) preferably is ≥ 95.0 wt%, more preferably ≥ 98.0 wt%, even more preferably ≥ 99.0 wt%, with regard to the weight of the terephthalic acid in the reaction mixture.

It is preferred that the poly(butylene terephthalate) oligomer that is used in the process according to the present invention comprises in the chain of the polymer ≥ 90.0 wt% with regard to the total weight of the poly(butylene terephthalate) oligomer of units derived from terephthalic acid and/or 1,4-butanediol, preferably ≥ 95.0 wt%, more preferably ≥ 98.0 wt%.

The poly(butylene terephthalate) oligomer preferably comprises in the chain of the polymer ≥ 90.0 wt%, preferably ≥ 95.0 wt%, more preferably ≥ 98.0 wt%, with regard to the total weight of the poly(butylene terephthalate) oligomer of units according to formula (I) and/or formula (II):

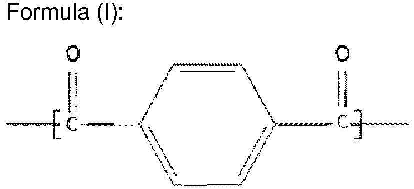

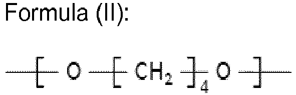

The process according to the present invention involves the production of poly(butylene terephthalate) starting from a poly(butylene terephthalate) oligomer by polycondensation in a low-pressure reactor. It is preferred that such low-pressure reactor is a continuous reactor, in which the poly(butylene terephthalate) oligomer is fed via at least one entry port, and in which the obtained poly(butylene terephthalate) is removed via at least one exit port. In such low-pressure reactor, the poly(butylene terephthalate) oligomer may for example be subjected to mixing to create a sufficiently high surface area for the polycondensation reactor to proceed to the desired extent. Such high surface area may also be beneficial in ensuring adequate degassing. The volatiles removed by degassing may comprise an unreacted fraction of the material of the reaction mixture, as well as formed by-products. Such unreacted fraction of the material of the reaction mixture may for example comprise unreacted diol, such as 1,4-butanediol. Such formed by-products may for example comprise water and tetrahydrofuran (THF). The process in certain embodiments may include arrangements for separating the unreacted fraction of the material of the reaction mixture and the by-products, and feeding a certain portion of the unreacted fraction of the material of the reaction mixture back to the process for the production of the poly(butylene terephthalate) oligomer such as the esterification process.

There are various ways to achieve the desired mixing in the low-pressure reactor. With progress of the polycondensation reaction, the viscosity of the poly(butylene terephthalate) in the low-pressure reactor increases. For that reason, the low-pressure reactor is preferably equipped with mixing means such as baffles. Such mixing baffles preferably provide a sufficient high torque to mix the contents of the low-pressure reactor. The mixing baffles may be attached to one or more shafts to form an agitator. Preferably, the low-pressure reactor is a dual-shafts ring reactor.

An example of a suitable low-pressure reactor is described in US2008-0064834A1. The use of such low-pressure reactor in the process according to the present invention may contribute to a uniform and predictable material quality of the poly(butylene terephthalate) obtained from the process.

It is further preferred that the low-pressure reactor is operated in a continuous way. Operating the low-pressure reactor in a continuous way may also contribute to the production of poly(butylene terephthalate) in a uniform and predictable manner, as well as it may contribute to increased efficiency of raw material utilization.

In a preferred embodiment, the present invention also relates to a process for the production of poly(butylene terephthalate) comprising the steps of:
(i) providing a poly(butylene terephthalate) oligomer having an intrinsic viscosity (IV) of 0.25 - 0.35 dl/g, preferably 0.27 - 0.33 dl/g, a carboxylic end group (CEG) content of 25-35 mmol/kg, preferably 27-33 mmol/kg, and a ratio of IV : CEG of ≤ 15 dl/mmol, preferably ≤ 10 dl/mmol;
(ii) introducing said poly(butylene terephthalate) oligomer to a low-pressure reactor; and
(iii) performing a polycondensation reaction in said low-pressure reactor by subjecting the poly(butylene terephthalate) oligomer to a pressure of ≥ 0.05 and ≤ 5.0 mbar at a temperature of 235 to 255 °C, for such average residence time to obtain a poly(butylene terephthalate) having a ratio of IV : CEG of ≥ 18 dl/mmol, preferably ≥ 25 dl/mmol and having an IV of ≥ 0.45 dl/g;
wherein
- the CEG is determined in accordance with ASTM D7409-15;
- the IV is determined in accordance with ASTM D2857-95 (2007); and
- steps (i), (ii) and (iii) are conducted in that order;
wherein further
- the average residence time of the material in the reactor is ≥ 45 min and ≤ 3 hrs;
- the obtained poly(butylene terephthalate) has an intrinsic viscosity of ≥ 0.45 dl/g and ≤ 1.00 dl/g; and
- the obtained poly(butylene terephthalate) has a carboxylic end group content of ≤ 20 mmol/g.

The invention will now be illustrated by the following non-limiting examples.

In a 500 ml round bottom glass flask equipped with a stirring rod, positioned in an oil bath, 70 g of a poly(butylene terephthalate) oligomer having an IV of 0.32 dl/g and a CEG of 32 mmol/kg were introduced and subjected to polycondensation during a reaction time, at a temperature and under a pressure as indicated in table 1, to obtain a poly(butylene terephthalate), which was subsequently removed from the flask and cooled to room temperature (23°C).

**Table 1: Polycondensation conditions**

| Example | | 1 (C) | 2 (C) | 3 (C) | 4 (C) | 5 (C) | 6 (C) | 7 (C) | 8 (C) |
|---|---|---|---|---|---|---|---|---|---|
| Temperature (°C) | | 240 | 245 | 250 | 245 | 250 | 245 | 240 | 240 |
| Pressure (mbar) | | 4.0 | 0.1 | 2.0 | 4.0 | 4.0 | 2.0 | 2.0 | 0.1 |
| Reaction time (min | | 20 | 20 | 20 | 55 | 38 | 37 | 54 | 38 |
| | | | | | | | | | |

| Example | 9 | 10 | 11 | 12 | 13 | 14 | 15 | 16 | 17 |
|---|---|---|---|---|---|---|---|---|---|
| Temperature (°C) | 250 | 240 | 245 | 240 | 245 | 240 | 245 | 250 | 240 |
| Pressure (mbar) | 4.0 | 4.0 | 4.0 | 2.0 | 2.0 | 2.0 | 2.0 | 0.1 | 0.1 |
| Reaction time (min | 100 | 100 | 95 | 95 | 98 | 55 | 98 | 75 | 100 |

Examples 1(C) - 8(C) are included for comparative purposes. Examples 9-17 are examples according to the present invention.

Of each of the obtained poly(butylene terephthalates) the intrinsic viscosity (IV) and the carboxylic end group content (CEG) was determined.

The intrinsic viscosity (IV) of oligomers and poly(butylene terephthalates) is measured according to ASTM D2857-95 (2007) using an automatic Viscotek Microlab^{®} 500 series Relative Viscometer Y501. 0.5 grams of oligomer sample was fully dissolved in a 60 to 40 mixture (% volume) of phenol and 1,1,2,2-tetrachloroethane solution (Harrell Industries). Two measurements were taken for each sample, and the reported result was the average of the two measurements.

The CEG concentration of samples of oligomers and poly(butylene terephthalates) was measured in accordance with ASTM D7409-15 using a Metrohm-Autotitrator Titrando 907, using a 800 Dosino 2 ml dosing unit and a 814 USB sample processor. All the units are controlled from a PC using Tiamo 2.0 Full version. A Metrohm Solvotrode easyclean electrode was used.

0.5 grams of oligomer or sample was fully dissolved in 25 ml of O-cresol / dichloromethane solvent (3:1 volume ratio) at 80 °C. After dissolving, the sample was cooled to room temperature and 50 ml of dichloromethane were added to the beaker. A sample blank was prepared in the similar way.

The titrant that was used was a 0.01 mol/l solution of KOH in isopropyl alcohol.

The electrodes and titrant dosing were dipped into the sample solution and the titration was started. The titrant volume increment was 0.05 ml. Waiting time between dosings was 15 s. The equivalence point was 28 mV. The quantity of KOH dosed in the titrated volume at the equivalence point was calculated and represents the CEG value in mmol/kg sample.

The obtained values are presented in table 2.

**Table 2: IV and CEG of poly(butylene terephthalates) according to the experimental examples**

| Example | | 1 (C) | 2 (C) | 3 (C) | 4 (C) | 5 (C) | 6 (C) | 7 (C) | 8 (C) |
|---|---|---|---|---|---|---|---|---|---|
| IV (dl/g) | | 0.22 | 0.26 | 0.27 | 0.39 | 0.41 | 0.33 | 0.36 | 0.41 |
| CEG (mmol/g) | | 13 | 32 | 12 | 12 | 12 | 7 | 7 | 7 |
| IV : CEG ratio (dl/mmol) | | 16.9 | 8.1 | 22.5 | 32.5 | 34.2 | 47.1 | 51.4 | 58.6 |
| | | | | | | | | | |

| Example | 9 | 10 | 11 | 12 | 13 | 14 | 15 | 16 | 17 |
|---|---|---|---|---|---|---|---|---|---|
| IV (dl/g) | 1.03 | 0.56 | 0.56 | 0.61 | 0.54 | 0.45 | 0.81 | 0.85 | 0.76 |
| CEG (mmol/g) | 39 | 15 | 13 | 17 | 12 | 10 | 24 | 19 | 11 |
| IV : CEG ratio (dl/mmol) | 35.9 | 37.3 | 43.1 | 35.9 | 45.0 | 45.0 | 33.8 | 44.7 | 69.1 |

The above presented examples demonstrate that via a process according to the present invention, involving subjecting a poly(butylene terephthalate) oligomer to polycondensation in a low-pressure reactor at a pressure of for example ≥ 0.05 and ≤ 5.0 mbar at a temperature of for example of 235 to 255 °C, a poly(butylene terephthalate) may be obtained having a ratio of IV : CEG of ≥ 18 dl/mmol, preferably ≥ 25 dl/mmol and an IV of ≥ 0.45 dl/g, while starting from a poly(butylene terephthalate) oligomer having an intrinsic viscosity (IV) of 0.25 - 0.35 dl/g, a carboxylic end group (CEG) content of 25-35 mmol/kg, and a ratio of IV : CEG of ≤ 15 dl/mmol.

In particular, it is demonstrated that in the case that the poly(butylene terephthalate) oligomer is subjected to reaction in the low-pressure reactor for at least 45 min and at most 3 hrs, a poly(butylene terephthalate) may be obtained having an even higher IV with a desirably high IV : CEG ratio.

## Claims

1. Process for the production of poly(butylene terephthalate) comprising the steps of:
(i) providing a poly(butylene terephthalate) oligomer having an intrinsic viscosity (IV) of 0.25 - 0.35 dl/g, a carboxylic end group (CEG) content of 25-35 mmol/kg, and a ratio of IV : CEG of ≤ 15 dl/mmol;
(ii) introducing said poly(butylene terephthalate) oligomer to a low-pressure reactor; and
(iii) performing a polycondensation reaction in said low-pressure reactor by subjecting the poly(butylene terephthalate) oligomer to a pressure of ≥ 0.05 and ≤ 5.0 mbar at a temperature of 235 to 255 °C, for such average residence time to obtain a poly(butylene terephthalate) having a ratio of IV : CEG of ≥ 18 dl/mmol and having an IV of ≥ 0.45 dl/g;
wherein
• the CEG is determined in accordance with ASTM D7409-15;
• the IV is determined in accordance with ASTM D2857-95 (2007); and
• steps (i), (ii) and (iii) are conducted in that order.
wherein the low-pressure reactor is operated such that the average residence time of the material in the reactor is ≥ 45 min and ≤ 3 hrs.

2. Process according to claim 1, wherein the low-pressure reactor is operated in a continuous way.

3. Process according to any one of claims 1-2, wherein the low-pressure reactor is equipped with mixing baffles, wherein preferably the mixing baffles are attached to one or more shafts to form an agitator.

4. Process according to any one of claims 1-3, wherein the low-pressure reactor is a dual-shafts ring reactor.

5. Process according to any one of claims 1-4, wherein the poly(butylene terephthalate) oligomer is an oligomer obtained from a reaction of a reaction mixture comprising terephthalic acid and 1,4-butanediol.

6. Process according to claim 5, wherein the molar ratio of 1,4-butanediol to terephthalic acid is ≥ 1.8 and ≤ 4.0.

7. Process according to any one of claims 5-6, wherein the reaction mixture further comprises:
• a quantity of one or more dicarboxylic acids selected from isophthalic acid, naphthalene dicarboxylic acid, 1,2-cyclohexane dicarboxylic acid, 1,4-cyclohexane dicarboxylic acid, 1,4-butane dicarboxylic acid, 1,6-hexane dicarboxylic acid, 1,8-octane dicarboxylic acid, and/or 1,10-decane dicarboxylic acid; and/or
• a quantity of one or more diols selected from ethanediol and/or propanediol.

8. Process according to any one of claims 5-7, wherein poly(butylene terephthalate) oligomer is obtained from a reaction in the presence of a quantity of a catalyst comprising one or more compound selected from tetraisopropyl titanate, tetraisobutyl titanate, tetra tert-butyl titanate, tetraphenyl titanate, tetraethylhyxyl titanate, and/or bis(alkanediolato) titanates, and/or reaction products thereof with a phosphorous compound selected from phosphoric acid, monoalkyl phosphate or monoaryl phosphate.

9. Process according to claim 8 wherein the poly(butylene terephthalate) oligomer comprises ≥ 50 ppm and ≤ 400 ppm of titanium derived from the catalyst.

10. Poly(butylene terephthalate) obtained according to the process of any one of claims 1-9, wherein the poly(butylene terephthalate) has an intrinsic viscosity of ≥ 0.45 dl/g and ≤ 1.00 dl/g.

11. Poly(butylene terephthalate) obtained according to the process of any one of claims 1-9, wherein the poly(butylene terephthalate) has a carboxylic end group content of ≤ 20 mmol/g.

12. Use of the poly(butylene terephthalate) according to any one of claims 10-11 in the production of fibres.

13. Textile fibres comprising the poly(butylene terephthalate) according to any one of claims 10-11, wherein the fibres have a chlorine resistance determined as the breaking force retention in accordance with ISO 17608 (2015) of ≥ 50%.

14. Textile fibres according to claim 13 wherein the fibres have an elastic elongation of ≥ 20 % as determined according to ASTM D4964 96.

## Patentansprüche

1. Verfahren für die Herstellung von Poly(butylenterephthalat), umfassend die Schritte:
(i) Bereitstellen eines Poly(butylenterephthalat)-Oligomers mit einer Grenzviskosität (IV) von 0,25 - 0,35 dl/g, einem Gehalt an Carbonsäureendgruppe (CEG) von 25-35 mmol/kg und einem Verhältnis von IV : CEG von ≤15 dl/mmol;
(ii) Einführen des Poly(butylenterephthalat)-Oligomers in einen Niederdruckreaktor; und
(iii) Durchführen einer Polykondensationsreaktion in dem Niederdruckreaktor durch Aussetzen des Poly(butylenterephthalat)-Oligomers einem Druck von ≥0,05 und ≤5,0 mbar bei einer Temperatur von 235 bis 255 °C für eine solche durchschnittliche Verweilzeit, um ein Poly(butylenterephthalat) mit einem Verhältnis von IV : CEG von ≥18 dl/mmol und mit einer IV von ≥0,45 dl/g zu erhalten;
wobei
• der CEG in Übereinstimmung mit ASTM D7409-15 bestimmt wird;
• die IV gemäß ASTM D2857-95 (2007) bestimmt wird; und
• die Schritte (i), (ii) und (iii) in dieser Reihenfolge durchgeführt werden.
wobei der Niederdruckreaktor derart betrieben wird, dass die durchschnittliche Verweilzeit des Materials in dem Reaktor ≥45 min und ≤3 Std. beträgt.

2. Verfahren nach Anspruch 1, wobei der Niederdruckreaktor auf kontinuierliche Weise betrieben wird.

3. Verfahren nach einem der Ansprüche 1-2, wobei der Niederdruckreaktor mit Mischprallflächen ausgestattet ist, wobei die Mischprallflächen vorzugsweise an einer oder mehreren Wellen befestigt sind, um ein Rührwerk auszubilden.

4. Verfahren nach einem der Ansprüche 1-3, wobei der Niederdruckreaktor ein Zweiwellen-Ringreaktor ist.

5. Verfahren nach einem der Ansprüche 1-4, wobei das Poly(butylenterephthalat)-Oligomer ein Oligomer ist, das aus einer Reaktion eines Reaktionsgemisches erhalten wird, das Terephthalsäure und 1,4-Butandiol umfasst.

6. Verfahren nach Anspruch 5, wobei das molare Verhältnis von 1,4-Butandiol zu Terephthalsäure ≥1,8 und ≤4,0 beträgt.

7. Verfahren nach einem der Ansprüche 5-6, wobei das Reaktionsgemisch ferner umfasst:
• eine Menge einer oder mehrerer Dicarbonsäuren, ausgewählt aus Isophthalsäure, Naphthalindicarbonsäure, 1,2-Cyclohexandicarbonsäure, 1,4-Cyclohexandicarbonsäure, 1,4-Butandicarbonsäure, 1,6-Hexandicarbonsäure, 1,8-Octandicarbonsäure und/oder 1,10-Decandicarbonsäure; und/oder
• eine Menge eines oder mehrerer Diole, ausgewählt aus Ethandiol und/oder Propandiol.

8. Verfahren nach einem der Ansprüche 5-7, wobei Poly(butylenterephthalat)-Oligomer aus einer Reaktion in der Gegenwart einer Menge eines Katalysators erhalten wird, der eine oder mehrere Verbindungen umfasst, die aus Tetraisopropyltitanat, Tetraisobutyltitanat, Tetra-tert-butyltitanat, Tetraphenyltitanat, Tetraethylhyxyltitanat und/oder Bis(alkandiolato)titanaten und/oder Reaktionsprodukte davon mit einer Phosphorverbindung ausgewählt sind, ausgewählt aus Phosphorsäure, Monoalkylphosphat oder Monoarylphosphat.

9. Verfahren nach Anspruch 8, wobei das Poly(butylenterephthalat)-Oligomer ≥50 ppm und ≤400 ppm von dem Katalysator abgeleitetes Titan umfasst.

10. Poly(butylenterephthalat), erhalten nach dem Verfahren nach einem der Ansprüche 1-9, wobei das Poly(butylenterephthalat) eine intrinsische Viskosität von ≥0,45 dl/g und ≤1,00 dl/g umfasst.

11. Poly(butylenterephthalat), erhalten nach dem Verfahren nach einem der Ansprüche 1-9, wobei das Poly(butylenterephthalat) einen Gehalt an Carbonsäureendgruppe von ≤20 mmol/g aufweist.

12. Verwendung des Poly(butylenterephthalats) nach einem der Ansprüche 10-11 bei der Herstellung von Fasern.

13. Textilfasern, umfassend das Poly(butylenterephthalat) nach einem der Ansprüche 10-11, wobei die Fasern eine Chlorbeständigkeit, bestimmt als die Bruchkraftretention in Übereinstimmung mit ISO 17608 (2015), von ≥50 % aufweisen.

14. Textilfasern nach Anspruch 13, wobei die Fasern eine elastische Dehnung von ≥20 %, bestimmt gemäß ASTM D4964 96, aufweisen.

## Revendications

1. Procédé pour la production de poly(butylène téréphtalate), comprenant les étapes de :
(i) la fourniture d'un oligomère de poly(butylène téréphtalate) ayant une viscosité intrinsèque (IV) de 0,25 - 0,35 dl/g, une teneur en groupe carboxylique terminal (CEG) de 25-35 mmol/kg, et un rapport de IV : CEG de ≤ 15 dl/mmol ;
(ii) l'introduction dudit oligomère de poly(butylène téréphtalate) dans un réacteur à basse pression ; et
(iii) la réalisation d'une réaction de polycondensation dans ledit réacteur à basse pression en soumettant l'oligomère de poly(butylène téréphtalate) à une pression de ≥ 0,05 et ≤ 5,0 mbar à une température de 235 à 255 °C, pendant un temps de séjour moyen tel à obtenir un poly(butylène téréphtalate) ayant un rapport de IV : CEG de ≥ 18 dl/mmol et ayant une IV de ≥ 0,45 dl/g ;
dans lequel
• le CEG est déterminé conformément à ASTM D7409-15 ;
• l'IV est déterminée conformément à ASTM D2857-95 (2007) ; et
• les étapes (i), (ii) et (iii) sont réalisées dans cet ordre,
dans lequel le réacteur à basse pression est mis en fonctionnement de telle sorte que le temps de séjour moyen du matériau dans le réacteur soit ≥ 45 min et ≤ 3 h.

2. Procédé selon la revendication 1, dans lequel le réacteur à basse pression est mis en fonctionnement de manière continue.

3. Procédé selon l'une quelconque des revendications 1 et 2, dans lequel le réacteur à basse pression est équipé de déflecteurs de mélangeage, dans lequel, de préférence, les déflecteurs de mélangeage sont attachés à un ou plusieurs arbres pour former un agitateur.

4. Procédé selon l'une quelconque des revendications 1 à 3, dans lequel le réacteur à basse pression est un réacteur annulaire à deux arbres.

5. Procédé selon l'une quelconque des revendications 1 à 4, dans lequel l'oligomère de poly(butylène téréphtalate) est un oligomère obtenu à partir d'une réaction d'un mélange de réaction comprenant de l'acide téréphtalique et du 1,4-butanediol.

6. Procédé selon la revendication 5, dans lequel le rapport molaire du 1,4-butanediol par rapport à l'acide téréphtalique est ≥ 1,8 et ≤ 4,0.

7. Procédé selon l'une quelconque des revendications 5 et 6, dans lequel le mélange de réaction comprend en outre :
• une quantité d'un ou plusieurs acides dicarboxyliques sélectionnés parmi de l'acide isophtalique, de l'acide naphtalène dicarboxylique, de l'acide 1,2-cyclohexane dicarboxylique, de l'acide 1,4-cyclohexane dicarboxylique, de l'acide 1,4-butane dicarboxylique, de l'acide 1,6-hexane dicarboxylique, de l'acide 1,8-octane dicarboxylique, et/ou de l'acide 1,10-décane dicarboxylique ; et/ou
• une quantité d'un ou de plusieurs diols sélectionnés parmi de l'éthanediol et/ou du propanediol.

8. Procédé selon l'une quelconque des revendications 5 à 7, dans lequel l'oligomère de poly(butylène téréphtalate) est obtenu à partir d'une réaction en présence d'une quantité d'un catalyseur comprenant un ou plusieurs composés sélectionnés parmi du titanate de tétraisopropyle, du titanate de tétraisobutyle, du titanate de tétra-tert-butyle, du titanate de tétraphényle, du titanate de tétraéthylhyxyle, et/ou des titanates de bis(alcanediolato), et/ou des produits de réaction de ceux-ci avec un composé phosphoreux sélectionné parmi de l'acide phosphorique, du phosphate de monoalkyle ou du phosphate de monoaryle.

9. Procédé selon la revendication 8 dans lequel l'oligomère de poly(butylène téréphtalate) comprend ≥ 50 ppm et ≤ 400 ppm de titane dérivé du catalyseur.

10. Poly(butylène téréphtalate) obtenu selon le procédé de l'une quelconque des revendications 1 à 9, dans lequel le poly(butylène téréphtalate) a une viscosité intrinsèque de ≥ 0,45 dl/g et ≤ 1,00 dl/g.

11. Poly(butylène téréphtalate) obtenu selon le procédé de l'une quelconque des revendications 1 à 9, dans lequel le poly(butylène téréphtalate) a une teneur en groupe carboxylique terminal de ≤ 20 mmol/g.

12. Utilisation du poly(butylène téréphtalate) selon l'une quelconque des revendications 10 et 11 dans la production de fibres.

13. Fibres textiles, comprenant le poly(butylène téréphtalate) selon l'une quelconque des revendications 10 et 11, dans lesquelles les fibres ont une résistance au chlore déterminée sous la forme de conservation de force de rupture conformément à ISO 17608 (2015) de ≥ 50 %.

14. Fibres textiles selon la revendication 13, dans lesquelles les fibres ont un allongement élastique de ≥ 20 % tel déterminé selon ASTM D4964 96.
